# FASCICULE DE BREVET EUROPEEN

(11) **EP 3 601 746 B1**
(45) Date de publication et mention de la délivrance du brevet: **12.01.2022**
(21) Numéro de dépôt: 18715226.9
(22) Date de dépôt: 23.03.2018
(51) Int. Cl.: F02C 7/20, F01D 25/04, F16L 3/13, F01D 9/06

(54) **APPUIS CENTRAUX DE TUBES SERVITUDE A RETOUR ÉLASTIQUE**
ZENTRALE HALTERUNG FÜR HILFSROHRE MIT ELASTISCHER RÜCKFÜHRUNG
CENTRAL SUPPORT FOR AUXILIARY TUBES WITH ELASTIC RETURN

(30) Priorité: 23.03.2017 FR 1752420
(43) Date de publication de la demande: 05.02.2020
(73) Titulaire: Safran Aircraft Engines, 75015 Paris (FR)
(72) Inventeur: SULTANA, Patrick Jean Laurent, 77550 Moissy-Cramayel (FR); PRESTEL, Sébastien Jean Laurent, 77550 Moissy-Cramayel (FR); RENON, Olivier, 77550 Moissy-Cramayel (FR)
(74) Mandataire: Regimbeau
(86) Numéro de dépôt international: PCT/FR2018/050707
(87) Numéro de publication internationale: WO 2018/172715

(56) Documents cités:
- EP-A1- 0 342 087
- EP-A2- 1 291 491
- WO-A1-2014/188122
- US-A1- 2016 348 520

## Description

### DOMAINE TECHNIQUE

L'invention concerne un ensemble de pièces de turbomachine.

L'invention vise plus spécifiquement les structures à bras creux que l'on trouve dans les turbomachines, ainsi que les canalisations s'étendant à l'intérieur de ces bras creux.

### ETAT DE LA TECHNIQUE

Le fonctionnement d'une turbomachine conventionnelle implique la circulation de divers fluides à travers ladite turbomachine. A titre d'exemple, ces fluides peuvent être de l'air, de l'huile, ou de l'air huilé.

Afin d'acheminer ces fluides, il est connu de disposer des canalisations dans la structure même de la turbomachine. Certaines de ces canalisations doivent relier des parties radialement externes de la turbomachine à des parties radialement internes, et ainsi traverser les flux d'air primaires et secondaires. Pour ce faire, il est connu de disposer ces canalisations, appelées tubes de servitude, au sein de bras creux de carter. Par exemple, de tels tubes se retrouvent dans les bras creux de carter aval de turbine, appelé TRF (Turbine Rear Frame). Cet exemple n'est cependant pas limitatif, puisqu'il est également possible de retrouver de tels tubes dans des parties de turbomachines telles qu'un TRV (redresseur aval de turbine, ou « Turbine Rear Vane » selon la terminologie anglo-saxonne généralement utilisée), un TCF (carter inter turbines, ou « Turbine Center Frame » selon la terminologie anglo-saxonne généralement utilisée) ou un TVF (redresseur inter turbines, ou « Turbine Vane Frame » selon la terminologie anglo-saxonne généralement utilisée).

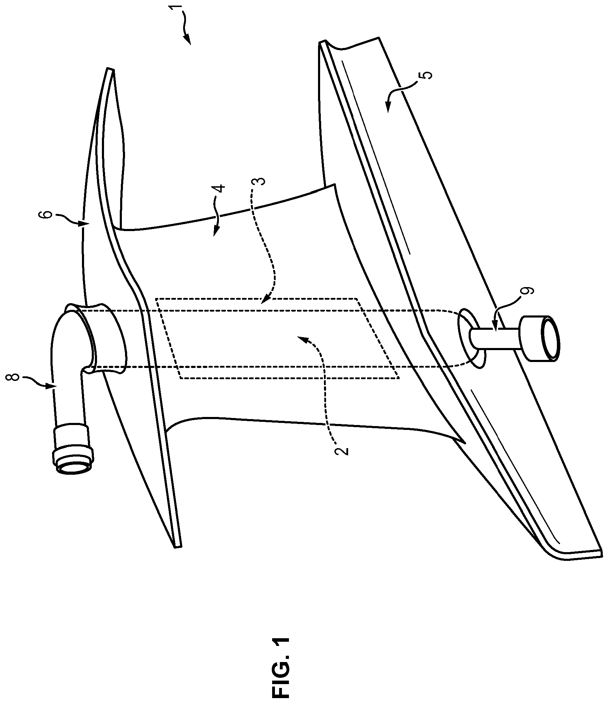

On a illustré en figure 1 un exemple d'ensemble 1 de turbomachine comprenant un tube 2 disposé à l'intérieur d'une cavité longitudinale 3 pourvue à l'intérieur d'un bras 4 creux reliant un moyeu interne 5 à une virole externe 6 de carter turbomachine.

Comme on peut le remarquer sur la figure 1, il est connu d'introduire le tube 2 au sein de la cavité longitudinale 3 de bras 4 creux au niveau de la jonction entre bras 4 creux et virole externe 6. Le tube 2 est ensuite glissé à l'intérieur de la cavité 3 jusqu'à s'y étendre totalement. Les extrémités 8, 9 de tube 2 sont alors fixées respectivement au moyeu interne 5 et à la virole externe 6 afin de solidariser le tube au moyeu 5 et à la virole 6. Par suite, les extrémités 8, 9 de tube sont assemblés à des tubes compris dans des circuits hydrauliques disposés dans des parties radialement externes ou internes, de sorte à assurer une communication fluidique entre des parties radialement externes de la turbomachine et des parties radialement internes.

Sur la figure 1, il est également visible que, sur la majorité de la longueur du tube 2, la surface externe du tube n'est pas en contact avec la paroi de cavité longitudinale 3. Le tube 2 ainsi disposé est donc libre de vibrer.

Or, le tube 2 présente des fréquences propres de vibration. Le tube 2 vibre le plus violemment lorsqu'il est excité à ces fréquences. Ceci induit une fatigue rapide pouvant aller jusqu'à une rupture. Ces fréquences dépendent de la longueur du tube 2, mais aussi du matériau qui le constitue, de son épaisseur, ou de sa température.

Plus le tube 2 est long, plus la fréquence propre la plus faible est basse, et proche des fréquences de rotation des corps basse et haute pression de la turbomachine. Ceci entraîne des problèmes de robustesse et de sécurité au sein des turbomachines. Ceci est particulièrement vrai dans le cas de moteurs de grande taille.

Il est donc connu d'ajouter un système d'appui central, solidaire du tube, disposé en une position sensiblement équidistante des deux extrémités du tube, de sorte à stabiliser le tube au sein du bras creux. Ce système d'appui central possède un général deux lames élastiques complémentaires disposées en regard l'une de l'autre de sorte à conférer à l'appui une section orthogonale en double U appelée « hurricane » dans la terminologie anglo-saxonne.

Un tel appui central possède une longueur de section orthogonale supérieure à la largeur de cavité longitudinale. Il est donc connu de compresser l'appui central au moment d'insérer la portion centrale du tube au sein de la cavité longitudinale, de sorte à autoriser le passage de l'ensemble du tube. Une fois inséré, le système d'appui central se détend en vue d'exercer une pression sur les parois de cavité longitudinale.

Cependant, dans les systèmes d'appui central de l'art antérieur, la détente de l'appui central observée n'est pas suffisante pour entrer en contact avec les parois de cavité longitudinale.

Il existe donc un besoin d'ensemble pour turbomachine comprenant un tube disposé à l'intérieur d'une cavité longitudinale de bras creux reliant un moyeu interne à une virole externe et ne présentant pas les inconvénients cités précédemment.

Le document EP 0 342 087 décrit une turbomachine comportant une grille d'aubes d'entrées dont tous les bras ont la même épaisseur y compris ceux dans lesquels est logée une tubulure de passage d'huile dont la structure particulière facilite le montage dans les bras avant que ceux-ci ne reçoivent leur volet aval mobile à calage variable constituant la directrice d'entrée.

### BASE DE L'INVENTION

Un but de l'invention est de proposer un ensemble pour turbomachine permettant d'acheminer un fluide entre deux parties de turbomachines distantes radialement de manière robuste et fiable.

Un autre but de l'invention est de proposer un ensemble pour turbomachine qui soit facile à monter et réduise ainsi les coûts de fabrication et de montage.

Un autre but de l'invention est de proposer un ensemble pour turbomachine adapté pour des turbomachines de grande dimension.

A cet égard, l'invention propose un ensemble pour turbomachine comprenant :
- un carter comprenant :
   - un moyeu interne,
   - une virole externe s'étendant autour et à distance du moyeu interne,
   - un bras creux, pourvu d'une cavité longitudinale et reliant le moyeu interne et la virole externe,
- un tube configuré pour s'étendre à l'intérieur de la cavité longitudinale du bras creux du carter et comprenant un appui central comprenant deux lames élastiques et configuré pour exercer une pression sur la paroi de cavité longitudinale lorsque le tube est étendu à l'intérieur de la cavité longitudinale, caractérisé en ce que les lames élastiques sont brasées au tube ou liées à un support configuré pour être rapporté sur le tube, en ce que chacune des lames élastiques présente une forme en U de sorte à ce que, une fois disposée sur le tube, le tube s'étend dans le creux des U formés par chacune des lames, et en ce que le (ou les) matériau(x) des lames élastiques présente(nt) une courbe de contrainte-déformation comprise entre les courbes de contraintes minimum et maximum du tableau A.

Alternativement, mais facultativement, l'ensemble selon l'invention peut en outre comprendre les caractéristiques suivantes :
- le (ou les) matériau(x) des lames élastiques présentent un module d'Young à 20°C compris entre 180 000 MPa et 250 000 MPa,
- les lames élastiques sont en inco718 forgé ou tôle (DMD0424),
- l'épaisseur des lames élastiques est comprise entre 0,5 mm et 1,5 mm, de préférence entre 0,7 mm et 0,9 mm,
- la longueur de section orthogonale au repos de l'appui central est supérieure de 12 mm à 30 mm à la largeur de la cavité longitudinale du bras creux de carter,
- la largeur des lames élastiques est comprise entre 30 mm et 50 mm,
- l'appui central est placé en une position sensiblement équidistante des deux extrémités du tube,
- l'ensemble comprend deux appuis, comprenant chacun deux lames élastiques, le premier appui étant disposé en une position distante d'une des extrémités de sensiblement un tiers de la distance séparant les extrémités, et le second appui étant disposé en une position distante de l'extrémité de sensiblement deux tiers de la distance séparant les extrémités.

L'invention porte également sur une turbomachine comprenant un ensemble tel que décrit précédemment.

L'invention porte également sur un procédé d'assemblage d'un ensemble tel que décrit précédemment, le procédé comprenant les étapes de :
- compression des lames élastiques d'appui central jusqu'à plastification desdites lames, et
- passage des lames élastiques d'appui central plastifiées à travers une ouverture de cavité longitudinale de bras creux de carter.

### DESCRIPTIF RAPIDE DES FIGURES

D'autres caractéristiques, buts et avantages de la présente invention apparaitront à la lecture de la description détaillée qui va suivre et en regard des dessins annexés donnés à titre d'exemple non limitatif et sur lesquels :
- La figure 1, déjà décrite, illustre un ensemble de turbomachine comprenant un tube de servitude sans appui central,
- La figure 2 illustre une partie d'un ensemble de turbomachine comprenant un moyeu interne et une virole externe reliés par des bras,
- La figure 3 est une vue en coupe de la partie d'ensemble de turbomachine illustrée à la figure 2,
- La figure 4 illustre une partie d'ensemble de turbomachine comprenant un tube à servitude pourvu d'un appui central type « hurricane » ;
- La figure 5 illustre les dimensions principales d'une lame élastique d'appui central type « hurricane »,
- La figure 6 illustre une section d'un appui central type « hurricane » rapporté sur un tube de servitude selon un plan orthogonal à la direction principale dudit tube,
- La figure 7 illustre le blocage de l'appui central type « hurricane » au repos à l'entrée de l'oblong de cavité longitudinale de bras creux de carter lors de l'insertion du tube de servitude à l'intérieur de ladite cavité,
- La figure 8 illustre le diagramme des précontraintes subies par l'appui hurricane au cours du procédé d'assemblage, et
- La figure 9 illustre les courbes de contraintes minimum et maximum entre lesquelles est comprise la courbe de contraintes du (ou des) matériau(x) de lames élastiques d'appui central.

### DESCRIPTION DETAILLEE DE L'INVENTION

En référence aux figures, on va maintenant décrire un ensemble pour turbomachine qui comprend un moyeu interne 10 et une virole externe 20, chacun de forme annulaire, et s'étendant autour d'un axe X-X de turbomachine.

Dans la turbomachine, l'ensemble décrit peut être placé à n'importe quel emplacement. Par exemple, ce peut être en aval de la turbine basse pression.

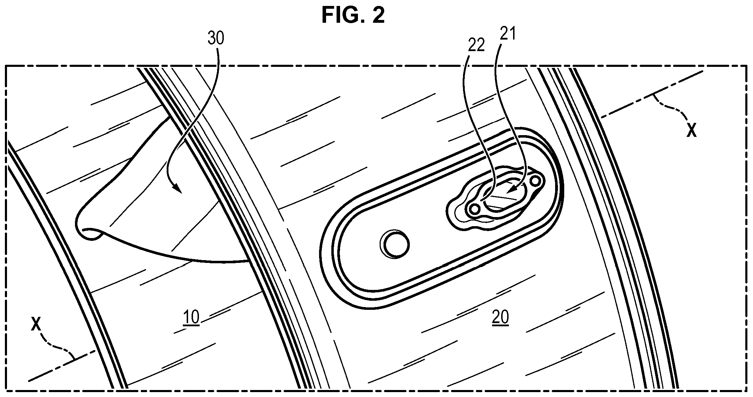

En référence à la figure 2, la virole externe 20 s'étend autour et à distance du moyeu interne 10. La virole externe 20 possède ainsi un diamètre supérieur au moyeu interne 10. La virole externe 20 et le moyeu interne 10 sont par ailleurs concentriques.

Le moyeu interne 10 et la virole externe 20 sont reliés par un ensemble de bras 30 s'étendant radialement par rapport à l'axe X-X.

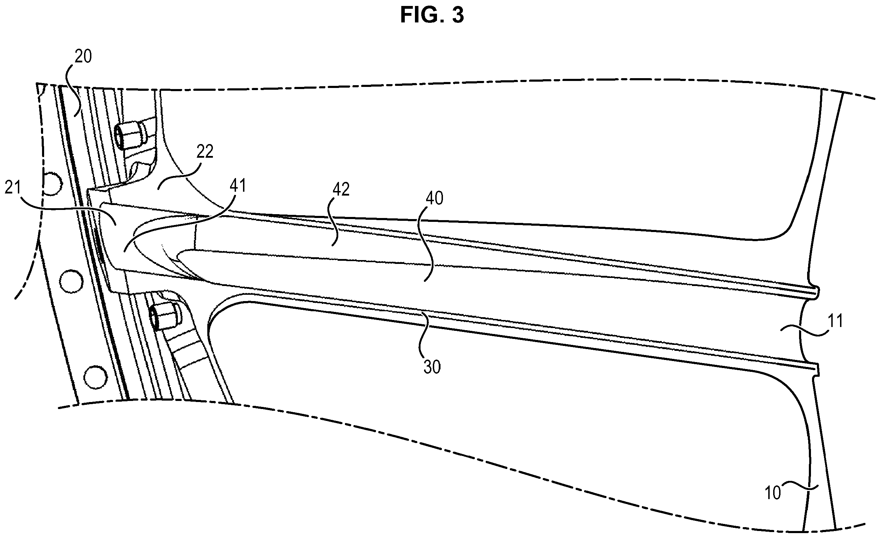

En référence à la figure 3, chacun des bras 30 est creux et comprend une cavité longitudinale 40 qui débouche dans le moyeu interne 10 par une première ouverture 11 et sur la virole externe 20 par un bossage 22 pourvu d'une seconde ouverture 21.

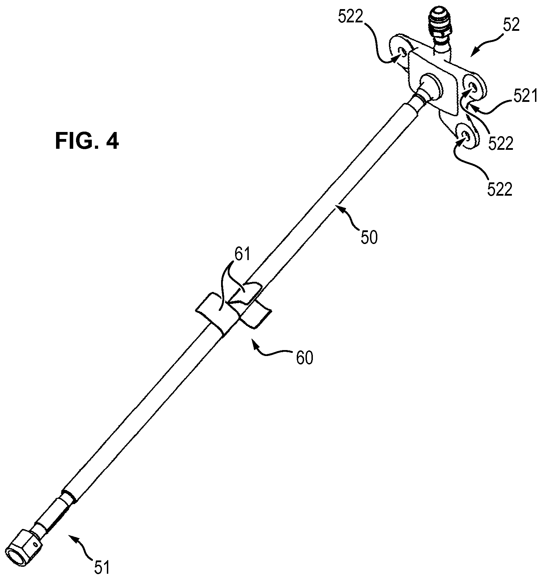

L'ensemble peut également comprendre un tube 50 à servitude illustré à la figure 4, configuré pour acheminer un fluide tel que de l'air, de l'huile, ou de l'air huilé. Le tube 50 est également configuré pour s'étendre dans la cavité longitudinale 40.

Dans cette configuration, une première extrémité de tube 51 traverse la première ouverture 11 de sorte à pouvoir être raccordée au moyeu interne 10, par exemple par boulonnage. De plus, le tube 50 se prolonge hors de la virole externe 20 à travers la seconde ouverture 21 par une seconde extrémité 52 qui peut, par exemple, prendre l'aspect d'un coude. La seconde extrémité 52 peut, par exemple, comprendre en outre une collerette 521 munie de trous périphériques 522 pour autoriser une liaison par vissage sur le bossage 22 de la virole externe 20.

Dans cette configuration, les deux extrémités du tube 51, 52 sont donc solidaires respectivement du moyeu interne 10 et de la virole externe 20.

Dans cette configuration, le tube 50 s'étend au sein de la cavité longitudinale 40 sans que la surface externe du tube 50 ne soit en contact avec une paroi 42 de cavité longitudinale 40. Ainsi, le tube 50 est propre à vibrer lors du fonctionnement de la turbomachine. Ces vibrations peuvent atteindre les fréquences propres du tube 50 qui peut donc entrer en résonnance et induire une fatigue rapide pouvant aller jusqu'à une rupture.

L'ensemble peut donc comprendre en outre un appui central 60 rapporté sur le tube 50. L'appui central 60 peut être rapporté par brasage directe sur le tube 50 ou via un support lui-même configuré pour être rapporté sur le tube 50.

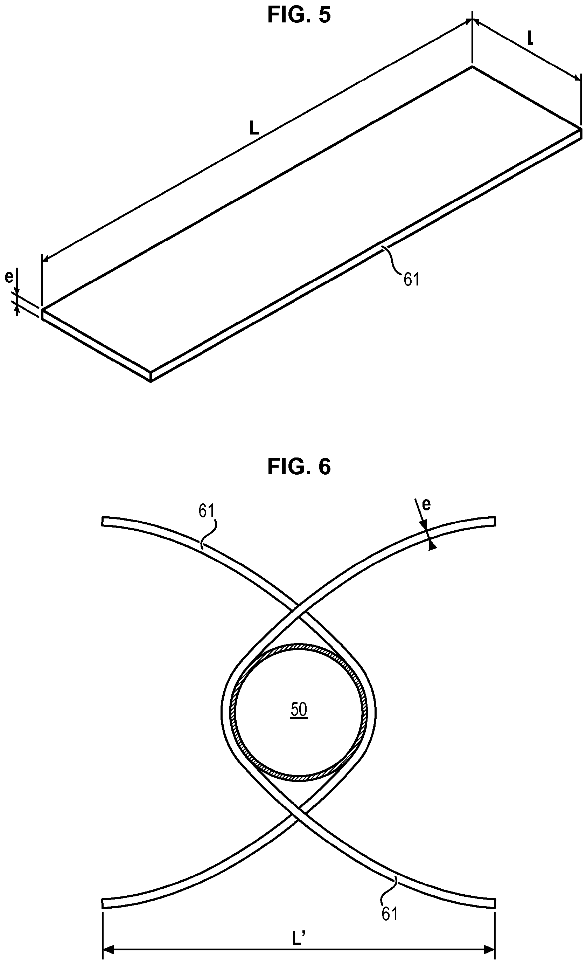

Comme illustré à la figure 5, l'appui central 60 comprend deux lames élastiques 61 de forme générale rectangulaire, et présentant une longueur L, une largeur I et une épaisseur e.

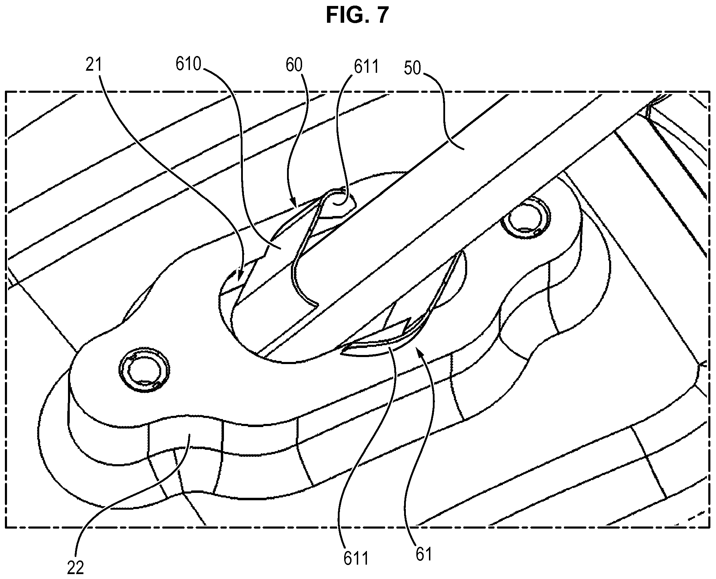

Comme visible sur la figure 4, les lames élastiques 61 enveloppent le tube 50. Une section selon un plan orthogonal à la direction principale du tube 50 de l'ensemble tube/lame élastique est visible sur la figure 6. Comme visible plus précisément sur la figure 7, chaque lame 61 comprend un méplat 610 à partir duquel s'étendent deux pattes 611 courbées. Chacune des lames 61 présente alors une forme en U. Une fois disposée sur le tube 50, le tube 50 s'étend dans le creux des U formés par chacune des lames 61.

De manière privilégiée, l'appui central 60 comprend deux lames élastiques 61 complémentaires disposées en regard l'une de l'autre et successivement le long de la direction principale du tube 50. L'appui central 60 présente ainsi une forme générale en double U, le tube 50 s'étendant dans les creux successifs des deux lames élastiques 61 complémentaires. La longueur L' de section orthogonale d'appui hurricane 60 est également illustrée sur la figure 6, et correspond à la distance séparant les extrémités en regard des lames élastiques 61 complémentaires. La structure en double U de l'appui 60 rappelant la forme d'un cyclone, la terminologie anglo-saxonne emploie le terme « hurricane » pour désigner un tel appui central 60.

L'appui hurricane 60 est donc configuré, lorsque le tube 50 est inséré dans la cavité longitudinale 40 de bras 30 creux de carter, pour exercer une pression suffisante sur les parois 42 de ladite cavité 40 afin empêcher les vibrations du tube 50 lors du fonctionnement de la turbomachine. A cet égard, il est connu de placer l'appui hurricane 60 en une position sensiblement équidistante des extrémités 51, 52 du tube 50, de sorte à maintenir la partie centrale du tube 50.

En variante, l'appui central 60 comprend deux couples de deux lames élastiques 61 formant deux appuis hurricane 60. Dans ce cas, le premier appui hurricane 60 peut être disposé en une position distante d'une des extrémités 51, 52 de sensiblement un tiers de la distance séparant les extrémités 51, 52. Le second appui hurricane 60 est alors disposé en une position distante de l'extrémité 51, 52 de sensiblement deux tiers de la distance séparant les extrémités 51, 52.

Comme on l'aura compris à la lumière de ce qui a été décrit précédemment, l'appui hurricane 60 est rapporté sur le tube 50 avant que le tube 50 ne soit disposé à l'intérieur de la cavité centrale 40.

Cependant, comme visible sur la figure 7, les dimensions de l'appui hurricane 60 sont telles que le passage de la portion de tube 50 portant l'appui hurricane 60 à travers la seconde ouverture 21 de cavité longitudinale 40 est rendue impossible.

A cet égard, un procédé d'assemblage de l'ensemble précédemment décrit comprend une étape de compression de l'appui hurricane 60 au passage de la seconde ouverture 21 de cavité longitudinale 40, jusqu'à plastification de l'appui 60, de sorte à permettre à la totalité du tube 50 de s'étendre au sein de la cavité longitudinale 40 de bras creux 30 de carter.

Comme visible sur la figure 3, la portion de cavité longitudinale 40 située à proximité de la seconde ouverture 21, appelée oblong 41, présente une largeur inférieure au reste de la cavité longitudinale 40. Par conséquent, l'appui hurricane 60 est maintenu en compression tant que l'ensemble de l'appui hurricane 60 n'a pas dépassé l'oblong 41. Par la suite, l'appui hurricane 60 se détend et vient exercer une pression sur les parois 42 de cavité longitudinale 40.

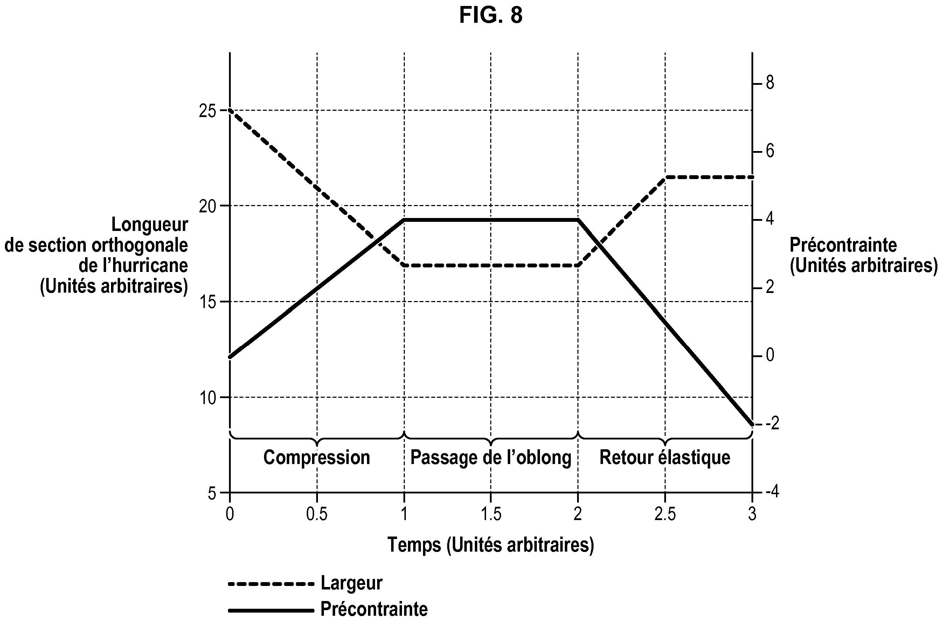

On a représenté sur la figure 8 le diagramme des précontraintes subies par l'appui hurricane 60 au cours d'un procédé d'assemblage. On distingue trois étapes de précontrainte en fonction du temps d'insertion du tube 50 au sein de la cavité longitudinale.

Lors d'une première étape, l'appui hurricane 60 est comprimé par des moyens mécaniques comme une pince, ou manuellement, de sorte à réduire la longueur de section orthogonale L' de l'appui hurricane 60 jusqu'à atteindre la largeur d'oblong 41. Cette compression entraîne la plastification de l'appui hurricane 60.

Lors d'une seconde étape, l'appui hurricane 60 passe l'oblong 41, et la longueur de section orthogonale L' de l'appui d'hurricane 60 est maintenue constante substantiellement égale à la largeur d'oblong 41.

Lors d'une dernière étape, l'appui hurricane 60 s'étend à nouveau par phénomène de retour élastique, jusqu'à atteindre une longueur de section orthogonale sensiblement équivalente à la largeur de la cavité longitudinale 40 et ainsi exercer une pression sur les parois 42 de ladite cavité 40.

Par la suite, les extrémités de tube 51, 52 sont fixées respectivement au moyeu interne 10 et à la virole externe 20.

Afin d'optimiser le fonctionnement de l'appui hurricane 60 précédemment décrit, on peut concevoir des lames élastiques de dimensions particulières.

A cet égard, la longueur de section orthogonale L', la largeur I, et l'épaisseur e des lames élastiques 61 ont été dimensionnées.

En ce qui concerne l'épaisseur e, le dimensionnement répond à deux contraintes opposées :
- l'épaisseur e doit être la plus importante possible pour augmenter la fréquence propre du tube 50, et
- l'épaisseur e doit être la plus faible possible pour faciliter le montage de l'ensemble, notamment lors du passage de l'appui hurricane 60 au niveau de l'oblong 41.

A cet égard, la Demanderesse a constaté qu'une épaisseur e optimale est comprise entre 0,5 et 1,0 mm, de préférence entre 0,7 et 0,9 mm, et de manière encore plus préférentielle vaut 0,7 mm.

En ce qui concerne la largeur I des lames élastiques 61, le dimensionnement doit également répondre à des contraintes de montage. Pour se faire, la Demanderesse a constaté qu'une largeur totale d'appui d'hurricane 60 optimale (i.e. en sommant les largeurs I successives de lames élastiques 61 accolées) est comprise entre 30 mm et 50 mm.

La dernière dimension d'appui 60 est la longueur de section orthogonale L' au repos. La Demanderesse a constaté qu'une longueur de section orthogonale L' au repos optimale est comprise entre la largeur de la cavité longitudinale 40 à laquelle s'ajoute 6 mm de chaque côté de la cavité 40, et la largeur de la cavité longitudinale 40 à laquelle s'ajoute 15 mm de chaque côté de la cavité.

Afin d'optimiser l'appui hurricane 60 précédemment décrit, on peut également prévoir des lames élastiques 61 constituées d'un matériau présentant des propriétés particulières.

Le matériau doit être tel que la plastification des lames élastiques 61 soit suffisantes au passage de l'oblong 41 de sorte à ce que le retour élastique soit plus grand que la différence de largeur entre l'oblong 41 et la cavité longitudinale 40 de bras 30.

Pour cela, la Demanderesse a constaté qu'un matériau optimal présente un module d'Young à 20°C compris entre 180 000 MPa et 250 000 MPa.

Par ailleurs les lames élastiques 61 peuvent comprendre un ou des matériau(x) présentant les caractéristiques de contrainte-déformation conformes au tableau A suivant :

**Tableau A**

| **Déformation (%)** | **Contrainte min associée (MPa)** | **Contrainte max associée (MPa)** |
|---|---|---|
| 0,5 | 800 | 1250 |
| 1 | 850 | 1300 |
| 2 | 900 | 1400 |
| 5 | 950 | 1470 |
| 7,5 | 1000 | 1500 |

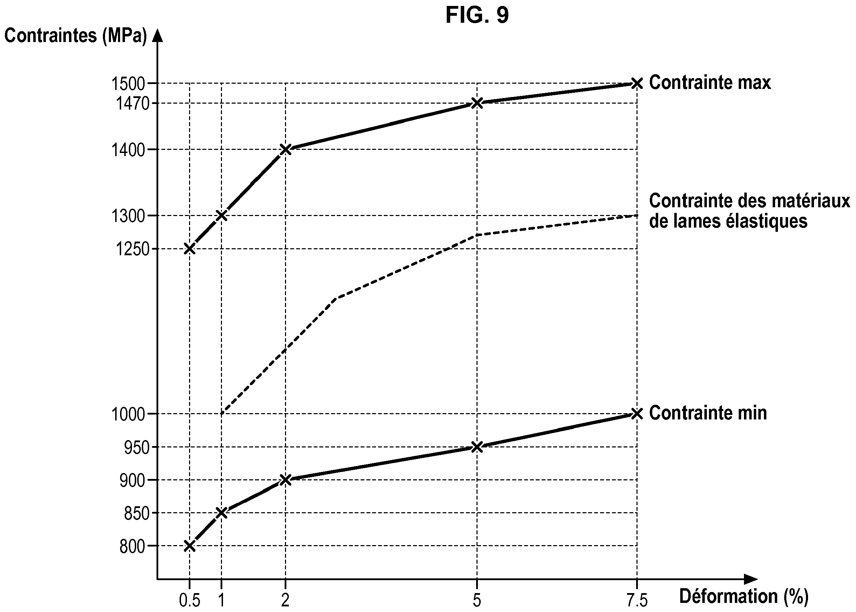

Comme illustré sur la figure 9, le (ou les) matériaux des lames élastiques 61 est peut (peuvent) être tel(s) que lesdites lames élastiques 61 présentent une courbe de contrainte comprise entre les courbes de contraintes minimum et maximum du tableau A.

Ces mesures sont effectuées sur des bancs d'essai de traction bien connus de l'homme l'art. A titre d'exemple non limitatif, ces essais peuvent être pratiqués sur une machine de traction à l'aide d'éprouvettes comprenant un matériau à tester.

L'ensemble précédemment décrit offre donc l'avantage de réduire les vibrations de résonnance de tube 50 de servitude en proposant un appui hurricane 60 dont le retour élastique après plastification soit suffisant pour assurer un contact permanent avec les parois 42 de cavité longitudinale 40 de bras 30 creux de carter.

Les propriétés de lames élastiques 61 d'appui hurricane 60 précédemment décrites présentent un compris entre :
- un statut dynamique qui requiert un appui hurricane 60 qui soit le plus épais possible, et
- une facilité de montage qui requiert un appui hurricane 60 qui soit le plus fin possible.

Enfin, il est possible de prévoir un ébavurage ou un léger rayon sur l'appui hurricane 60 de sorte à minimiser les rayures sur les parois 42 de la cavité longitudinale 40 lors de l'insertion du tube 50.

## Revendications

1. Ensemble pour turbomachine comprenant :
• un carter comprenant :
- un moyeu interne (10),
- une virole externe (20) s'étendant autour et à distance du moyeu interne (10),
- un bras creux (30), pourvu d'une cavité longitudinale (40) et reliant le moyeu interne (10) et la virole externe (20),
• un tube (50) configuré pour s'étendre à l'intérieur de la cavité longitudinale (40) du bras (30) creux du carter et comprenant un appui central (60) comprenant deux lames élastiques (61) et configuré pour exercer une pression sur la paroi (42) de cavité longitudinale (40) lorsque le tube (50) est étendu à l'intérieur de la cavité longitudinale (40).
**caractérisé en ce que** les lames élastiques (61) sont brasées au tube (50) ou liées à un support configuré pour être rapporté sur le tube (50), **en ce que** chacune des lames élastiques (61) présente une forme en U de sorte à ce que, une fois disposée sur le tube (50), le tube (50) s'étend dans le creux des U formés par chacune des lames (61), et **en ce que** le (ou les) matériau(x) des lames élastiques (61) présente(nt) une courbe de contrainte-déformation comprise entre les courbes de contraintes minimum et maximum du tableau suivant :
| **Déformation (%)** | **Contrainte min associée (MPa)** | **Contrainte max associée (MPa)** |
|---|---|---|
| 0,5 | 800 | 1250 |
| 1 | 850 | 1300 |
| 2 | 900 | 1400 |
| 5 | 950 | 1470 |
| 7,5 | 1000 | 1500 |

2. Ensemble selon la revendication 1, dans lequel le (ou les) matériau(x) des lames élastiques (61) présentent un module d'Young à 20°C compris entre 180 000 MPa et 250 000 MPa.

3. Ensemble selon la revendication 1, dans lequel les lames élastiques (61) sont en inco718 forgé ou tôle (DMD0424).

4. Ensemble selon l'une des revendications 1 à 3, dans lequel l'épaisseur des lames élastiques (61) est comprise entre 0,5 mm et 1,5 mm, de préférence entre 0,7 mm et 0,9 mm.

5. Ensemble selon l'une des revendications 1 à 4, dans lequel la longueur de section orthogonale au repos de l'appui central (60) est supérieure de 12 mm à 30 mm à la largeur de la cavité longitudinale (40) du bras (30) creux de carter.

6. Ensemble selon l'une des revendications 1 à 5, dans lequel la largeur des lames élastiques (61) est comprise entre 30 mm et 50 mm.

7. Ensemble selon l'une des revendications 1 à 6, dans lequel l'appui central (60) est placé en une position sensiblement équidistante des deux extrémités (51, 52) du tube (50).

8. Ensemble selon l'une des revendications 1 à 6, comprenant deux appuis (60), comprenant chacun deux lames élastiques (61), le premier appui (60) étant disposé en une position distante d'une des extrémités (51, 52) de sensiblement un tiers de la distance séparant les extrémités (51, 52), et le second appui (60) étant disposé en une position distante de l'extrémité (51, 52) de sensiblement deux tiers de la distance séparant les extrémités (51, 52).

9. Turbomachine comprenant un ensemble selon l'une des revendications 1 à 8.

10. Procédé d'assemblage d'un ensemble pour turbomachine selon l'une des revendications 1 à 8, le procédé comprenant les étapes de :
• compression des lames élastiques (61) d'appui central (60) jusqu'à plastification desdites lames élastiques (61), et
• passage des lames élastiques (61) d'appui central (60) plastifiées à travers une ouverture (21) de cavité longitudinale (40) de bras (20) creux de carter.

## Patentansprüche

1. Anordnung für eine Turbomaschine, die umfasst:
• ein Gehäuse, das umfasst:
- eine innere Nabe (10),
- einen äußeren Ring (20), der sich um die innere Nabe (10) und von ihr beabstandet erstreckt,
- einen hohlen Arm (30), der mit einem länglichen Hohlraum (40) versehen ist und die innere Nabe (10) und den äußeren Ring (20) verbindet,
• ein Rohr (50), das dafür ausgelegt ist, dass es sich im Inneren des länglichen Hohlraums (40) des hohlen Arms (30) des Gehäuses erstreckt und eine zentrale Abstützung (60) umfasst, die zwei elastische Lamellen (61) umfasst und ausgelegt ist, um einen Druck auf die Wand (42) des länglichen Hohlraums (40) auszuüben, wenn sich das Rohr (50) im Inneren des länglichen Hohlraums (40) erstreckt,
**dadurch gekennzeichnet, dass** die elastischen Lamellen (61) mit dem Rohr (50) verlötet oder mit einem Halter verbunden sind, der dafür ausgelegt ist, dass er auf dem Rohr (50) angebracht ist, dass jede der elastischen Lamellen (61) eine U-Form aufweist, so dass, nach Anordnung auf dem Rohr (50), sich das Rohr (50) in der Aushöhlung der Us erstreckt, die von jeder der Lamellen (61) gebildet sind, und dass das (oder die) Material(ien) der elastischen Lamellen (61) eine Belastungs-Verformungs-Kurve aufweist/aufweisen, die zwischen den Minimum- und Maximum-Belastungskurven der folgenden Tabelle liegen:
| Verformung (%) | entsprechende min. Belastung (MPa) | entsprechende max. Belastung (MPa= |
|---|---|---|
| 0,5 | 800 | 1250 |
| 1 | 850 | 1300 |
| 2 | 900 | 1400 |
| 5 | 950 | 1470 |
| 7,5 | 1000 | 1500 |

2. Anordnung nach Anspruch 1, wobei das (oder die) Material (ien) der elastischen Lamellen (61) ein Young-Modul bei 20 °C aufweist/aufweisen, das zwischen 180000 MPa und 250000 MPa liegt.

3. Anordnung nach Anspruch 1, wobei die elastischen Lamellen (61) aus geschmiedetem inco718 oder Blech (DMD0424) sind.

4. Anordnung nach einem der Ansprüche 1 bis 3, wobei die Dicke der elastischen Lamellen (61) zwischen 0,5 mm und 1,5 mm, vorzugsweise zwischen 0,7 mm und 0,9 mm, liegt.

5. Anordnung nach einem der Ansprüche 1 bis 4, wobei die Länge des orthogonalen Querschnitts in Ruhe der zentralen Abstützung (60) 12 mm bis 30 mm größer als die Breite des länglichen Hohlraums (40) des hohlen Gehäusearms (30) ist.

6. Anordnung nach einem der Ansprüche 1 bis 5, wobei die Breite der elastischen Lamellen (61) zwischen 30 mm und 50 mm liegt.

7. Anordnung nach einem der Ansprüche 1 bis 6, wobei die zentrale Abstützung (60) an einer Position platziert ist, die von den zwei Enden (51, 52) des Rohrs (50) etwa gleich beabstandet ist.

8. Anordnung nach einem der Ansprüche 1 bis 6, umfassend zwei Abstützungen (60), von denen jede zwei elastische Lamellen (61) umfasst, wobei die erste Abstützung (60) an einer Position angeordnet ist, die von einem der Enden (51, 52) etwa ein Drittel des Abstands beabstandet ist, der die Enden (51, 52) trennt, und die zweite Abstützung (60) an einer Position angeordnet ist, die vom Ende (51, 52) etwa zwei Drittel des Abstands beabstandet ist, der die Enden (51, 52) trennt.

9. Turbomaschine, die eine Anordnung nach einem der Ansprüche 1 bis 8 umfasst.

10. Verfahren zur Montage einer Anordnung für eine Turbomaschine nach einem der Ansprüche 1 bis 8, wobei das Verfahren die folgenden Schritte umfasst:
• Kompression der elastischen Lamellen (61) einer zentralen Abstützung (60) bis zur Plastifizierung der elastischen Lamellen (61), und
• Hindurchführen der plastifizierten elastischen Lamellen (61) einer zentralen Abstützung (60) durch eine Öffnung (21) des länglichen Hohlraums (40) des hohlen Gehäusearms (20).

## Claims

1. A turbomachine assembly comprising:
• a casing comprising:
- an inner hub (10),
- an outer shroud (20) extending around and away from the inner hub (10),
- a hollow arm (30) provided with a longitudinal cavity (40) and connecting the inner hub (10) and the outer shroud (20),
• a tube (50) configured to extend inside the longitudinal cavity (40) of the hollow arm (30) of the casing and comprising a central bracket (60) comprising two elastic blades (61) and configured to exert a pressure on the longitudinal cavity (40) wall (42) when the tube (50) is extended within the longitudinal cavity (40),
**characterized in that** the elastic blades (61) are brazed to the tube (50) or linked to a support configured to be added onto the tube (50), **in that** each of the elastic blades (61) has a U shape such that, once it is disposed on the tube (50), the tube (50) extends into the recess of the U shapes formed by each of the blades (61), and **in that** the material(s) of the elastic blades (61) has/have a stress-strain curve comprised between the minimum and maximum stress curves of the following table.
| Deformation (%) | Minimal stress associated (MPa) | Maximal stress associated (MPa) |
|---|---|---|
| 0.5 | 800 | 1,250 |
| 1 | 850 | 1,300 |
| 2 | 900 | 1,400 |
| 5 | 950 | 1,470 |
| 7.5 | 1,000 | 1,500 |

2. The assembly according to claim 1, wherein the material(s) of the elastic blades (61) has/have a Young's modulus at 20 °C comprised between 180,000 MPa and 250,000 MPa.

3. The assembly according to claim 1, wherein the elastic blades (61) are made of forged inco718 or sheet metal (DMD0424).

4. The assembly according to any of claims 1 to 3, wherein the thickness of the elastic blades (61) is comprised between 0.5 mm and 1.5 mm, preferably between 0.7 mm and 0.9 mm.

5. The assembly according to any of claims 1 to 4, wherein the orthogonal cross-section length at rest of the central bracket (60) is 12 mm to 30 mm greater than the width of the longitudinal cavity (40) of the hollow arm (30) of the casing.

6. The assembly according to any of claims 1 to 5, wherein the width of the elastic blades (61) is comprised between 30 mm and 50 mm.

7. The assembly according to any of claims 1 to 6, wherein the central bracket (60) is placed in a position substantially equidistant from both ends (51, 52) of the tube (50).

8. The assembly according to any of claims 1 to 6, comprising two brackets (60), each comprising two elastic blades (61), the first bracket (60) being disposed in a position distant from one of the ends (51, 52) by substantially one third of the distance separating the ends (51, 52), and the second bracket (60) being disposed in a position distant from the end (51, 52) by substantially two thirds of the distance separating the ends (51, 52).

9. A turbomachine comprising an assembly according to any of claims 1 to 8.

10. A method for assembling a turbomachine assembly according to any of claims 1 to 8, the method comprising the steps of:
• compressing the elastic blades (61) of the central bracket (60) until plasticization of said elastic blades (61), and
• passing the plasticized elastic blades (61) of the central bracket (60) through an opening (21) of the longitudinal cavity (40) of the hollow arm (20) of the casing.
